# EUROPÄISCHE PATENTSCHRIFT

(11) **EP 0 759 513 B1**
(45) Veröffentlichungstag und Bekanntmachung des Hinweises auf die Patenterteilung: **21.03.2001**
(21) Anmeldenummer: 96110600.2
(22) Anmeldetag: 01.07.1996
(51) Int. Cl.: F16D 48/06, B60K 41/02

(54) **Steuerung einer automatischen Kupplung in Abhängigkeit vom Motordrehmoment**
Automatic clutch control as a function of engine torque
Régulation d'un embrayage automatique en fonction du couple moteur

(30) Priorität: 21.08.1995 DE 19530610
(43) Veröffentlichungstag der Anmeldung: 26.02.1997
(73) Patentinhaber: DaimlerChrysler AG, 70567 Stuttgart (DE)
(72) Erfinder: Kosik, Franz, 73760 Ostfildern (DE); Wörner, Günter, 71394 Kernen (DE)

(56) Entgegenhaltungen:
- WO-A-89/03318
- GB-A- 2 080 910
- US-A- 4 805 750

## Beschreibung

Die Erfindung betrifft die Steuerung einer automatischen Kupplung zwischen Motor - insbesondere Verbrennungsmotor - und Antriebstrang eines Kraftfahrzeuges mit willkürlich schaltbarem Getriebe, wobei die Kupplung beim Fahrbetrieb in Abhängigkeit vom Motordrehmoment derart gesteuert wird, daß das von der Kupplung übertragbare Moment nur geringfügig oberhalb des jeweils vom Motor erzeugten Drehmomentes liegt.

Kraftfahrzeuge mit manuell geschalteten Getrieben und automatisch betätigter Kupplung sind allgemein bekannt und werden serienmäßig hergestellt. Die bei Gangwechsel den Kraftfluß zwischen Motor und Antriebsrädern automatisch unterbrechende Kupplung arbeitet dabei üblicherweise mit hohem Komfort, indem sie vergleichsweise weich öffnet und schließt.

Aus der DE 30 39 091 A1 ist es bekannt, das von der Kupplung übertragbare Moment beim Fahrbetrieb in Abhängigkeit vom Motordrehmoment zu steuern, und zwar derart, daß die Kupplung unterhalb eines unteren Schwellwertes des Motordrehmomentes ein konstant vorgegebenes Moment zu übertragen vermag, während das übertragbare Moment der Kupplung oberhalb des vorgenannten Schwellwertes des Motormomentes proportional mit dem Motormoment ansteigt und oberhalb eines oberen Schwellwertes des Motormomentes auf einen Höchstwert eingestellt wird.

Nach der DE-OS 28 33 961 ist vorgesehen, die bei einem Gangwechsel des Getriebes zunächst geöffnete Kupplung nach Ausführung des Gangwechsels gesteuert zu schließen, derart, daß eine zwischen Kupplungseingang und Kupplungsausgang aufgetretene Drehzahldifferenz mit vorgebbarem zeitlichen Gradienten abgebaut wird, dessen Größe mit zunehmender Betätigung eines zur Leistungssteuerung des Motors dienenden Fahrpedales zunimmt. Damit läßt sich erreichen, daß der Schließvorgang der Kupplung relativ gleichmäßig erfolgen kann.

Die DE 39 22 315 A1 bezieht sich auf die Steuerung einer automatischen Kupplung in Abhängigkeit vom Motordrehmoment beim Rangierbetrieb.

Aus der GB 2 080 910 A ist es bekannt, eine automatische Kupplung in Abhängigkeit von der Motordrehzahl zu steuern. Unterhalb eines unteren Schwellwertes (n₀) der Motordrehzahl bleibt die Kupplung offen. Sobald diese Drehzahl überschritten wird, beginnt die Kupplung zu greifen, wobei bei ansteigender Motordrehzahl das übertragbare Moment der Kupplung zunehmend erhöht wird, bis die Kupplung bei einem oberen Schwellwert der Motordrehzahl (nₑ) in einen schlupffreien Schließzustand gebracht wird. Die genannten Drehzahlschwellen können in Abhängigkeit von der Fahrgeschwindigkeit und anderen Parametern verändert werden. Darüber hinaus ist vorgesehen, die drehzahlabhängige Kupplungssteuerung mit einer zeitabhängigen Kupplungssteuerung zu überlagern, derart, daß die Kupplung in jedem Falle nach einer vorgegebenen Zeitspanne geschlossen wird, wenn die Motordrehzahl oberhalb der unteren Drehzahlschwelle liegt, d.h. die Kupplung wird in diesem Falle auch dann geschlossen, wenn die obere Drehzahlschwelle nicht überschritten wird, weil der Fahrer beispielsweise sehr niedertourig fahren will.

Aufgabe der Erfindung ist es nun, die eingangs angegebene Steuerung der Kupplung zu verbessern.

Diese Aufgabe wird erfindungsgemäß dadurch gelöst, daß die Kupplung unmittelbar nach einem Gangwechsel des Getriebes für eine Verzögerungszeit auf maximales übertragbares Drehmoment eingestellt wird, wenn das Motordrehmomemt oder eine dazu analoge Größe einen geringen Schwellwert überschreitet oder schnell erhöht wird.

Die Erfindung beruht auf dem allgemeinen Gedanken, einerseits einen hohen Komfort dadurch zu gewährleisten, daß das von der Kupplung übertragbare Drehmoment normalerweise nur geringfügig über dem vom Motor erzeugten Drehmoment liegt, d.h. die Kupplung ist in den meisten Betriebsphasen nur vergleichsweise schwach geschlossen. Dies hat zur Folge, daß ein vollständiges Öffnen der Kupplung, wie es typischerweise beim Gangwechsel erfolgt, vergleichsweise schnell durchgeführt werden kann. Außerdem können eventuelle Stöße im Antriebstrang durch Schlupf der Kupplung aufgefangen werden. Andererseits kann bei starker Beschleunigung des Fahrzeuges und entsprechend schnell durchgeführten Gangwechseln bei der Erfindung ein in diesem Falle unerwünschter Schlupf der Kupplung mit der Folge eines vergleichsweise starken Verschleißes vermieden werden. Denn nach einem Gangwechsel wird bei Überschreitung eines geringen Schwellwertes des Motordrehmomentes die Kupplung zunächst auf maximales übertragbares Moment eingestellt, d.h. die automatische Kupplung wird so gesteuert, wie ein sportlicher Fahrer bei starker Beschleunigung eine Fahrzeuges eine willkürlich betätigbare Kupplung steuern würde.

Durch die nachfolgende Steuerung des Kupplungsmomentes in Abhängigkeit vom Motordrehmoment oder dazu analogen Größen wird dann wieder ein schnelles Öffnen der Kupplung bei nachfolgenden Gangwechseln gewährleistet.

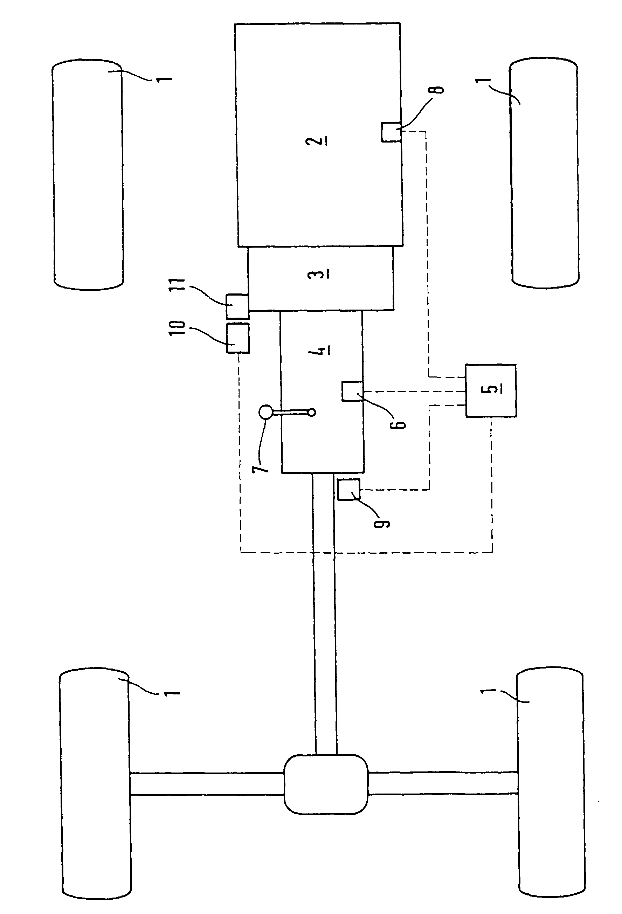

Im übrigen wird hinsichtlich bevorzugter Merkmale auf die Ansprüche sowie die nachfolgende Erläuterung der Zeichnung verwiesen, anhand der besonders bevorzugte Ausführungsformen der Erfindung beschrieben werden.

Dabei zeigt die einzige Figur in schematisierter Darstellung ein Kraftfahrzeug mit manuell schaltbarem Getriebe und automatischer Kupplung, die in erfindungsgemäßer Weise gesteuert wird.

Von dem Kraftfahrzeug sind lediglich die vorderen und hinteren Räder 1 dargestellt, wobei im gezeigten Beispiel die Hinterräder vom Fahrzeugmotor 2 über eine automatisch betätigte Kupplung 3 und ein manuell geschaltetes Getriebe 4 angetrieben werden.

Zur Steuerung der automatischen Kupplung 3 dient eine elektronische Steuereinheit 5, die eingangsseitig mit einem Schaltsensoraggregat 6 verbunden ist, welches ein Signal erzeugt, sobald ein Schalthebel 7 für einen Gangwechsel des Getriebes 4 betätigt wird. Außerdem ist die Steuereinheit 5 eingangsseitig mit einem Sensor 8 verbunden, der ein das Motordrehmoment wiedergebendes Signal erzeugt. Dieser Sensor 8 kann beispielsweise die Stellung der Drosselklappe des Fahrzeugmotors und/oder die Stellung eines zur willkürlichen Leistungssteuerung des Motors dienenden Fahrpedales registrieren.

Im übrigen kann die Steuereinheit 5 noch Signale weiterer Sensoren auswerten, beispielsweise eines Sensors 9 für die Fahrgeschwindigkeit.

Ausgangsseitig ist die Steuereinheit 5 mit einem vorzugsweise elektrischen Stellmotor 10 verbunden, der die Kupplung 3 über ein selbsthemmendes Getriebe 11, beispielsweise ein Schnekkengetriebe, betätigt.

Bei normalem Fahrbetrieb wird die automatische Kupplung 3 von der Steuereinheit 5 durch entsprechende Betätigung des Stellmotors 10 so eingestellt, daß das von der Kupplung 3 übertragbare Drehmoment (Kupplungsmoment) nur etwas größer ist als das vom Motor 2 erzeugte Drehmoment. Dies ist im wesentlichen gleichbedeutend damit, daß der Kraftschluß zwischen Eingang und Ausgang der Kupplung 3 beispielsweise in Abhängigkeit von der Stellung der Drosselklappe des Motoros 2 bzw. in Abhängigkeit von den Signalen des Sensors 8 gesteuert wird. In der Regel werden also die Betätigungsorgane der Kupplung 3 in einer mittleren Stellung zwischen den einander entgegengesetzten Endlagen für vollständig geöffnete bzw. maximal geschlossene Kupplung 3 gehalten.

Wird der Schalthebel 7 für einen Gangwechsel des Getriebes 4 betätigt, so kann dann die vollständig geöffnete Lage der Kupplung 3 vergleichsweise schnell erreicht werden.

Wenn nach erfolgtem Gangwechsel das Drehmoment des Fahrzeugmotors und/oder die Fahrgeschwindigkeit einen relativ geringen Schwellwert überschreiten, d.h. wenn die Signale der Sensoren 8 bzw. 9 ein relativ großes Motordrehmoment bzw. eine relativ große Fahrgeschwindigkeit anzeigen, wird die automatische Kupplung 3 zunächst (schnell) in ihren vollständig geschlossenen Zustand gebracht. Erst nach einer gewissen Verzögerungszeit wird die Kupplung 3 wieder analog zu dem vom Motor erzeugten Drehmoment gesteuert.

Auf diese Weise ist gewährleistet, daß die automatische Kupplung 3 bei Schaltvorgängen während ausgeprägter Beschleunigungsphasen mit vergleichsweise geringem Schlupf arbeitet.

Wenn dagegen der Motor 2 nach einem Gangwechsel nur ein geringes Motordrehmomemt erzeugt, etwa weil das Fahrpedal nicht betätigt wird und die Drosselklappe des Motors dementsprechend weitgehend geschlossen ist, so wird das Kupplungsmoment von Anfang an analog zum Motordrehmoment gesteuert, um ein bei derartigen Betriebsphasen besonders weiches Einkuppeln, wie es im Hinblick auf den Komfort wünschenswert ist, zu ermöglichen.

## Patentansprüche

1. Steuerung einer automatischen Kupplung (3) zwischen Motor (2), insbesondere Verbrennungsmotor, und Antriebstrang eines Kraftfahrzeuges mit willkürlich schaltbarem Getriebe (4), wobei die Kupplung beim Fahrbetrieb in Abhängigkeit vom Motordrehmoment derart gesteuert wird, daß das von der Kupplung übertragbare Moment nur geringfügig oberhalb des jeweils vom Motor erzeugten Drehmomentes liegt,
**dadurch gekennzeichnet,**
daß die Kupplung (3) unmittelbar nach einem Gangwechsel des Getriebes für eine Verzögerungszeit auf maximales übertragbares Drehmoment eingestellt wird, wenn das Motordrehmoment oder eine dazu analoge Größe einen geringen Schwellwert überschreitet oder schnell erhöht wird.

2. Steuerung nach Anspruch 1,
**dadurch gekennzeichnet,**
daß die Kupplung (3) unmittelbar nach einem Gangwechsel in Abhängigkeit vom Motordrehmoment gesteuert wird, wenn das Motordrehmoment nach dem Gangwechsel gering bleibt und/oder nur langsam gegenüber einem geringen Wert erhöht wird.

3. Stuerung nach Anspruch 1 oder 2,
**dadurch gekennzeichnet,**
daß das Kupplungsmoment bei höherer Fahrgeschwindigkeit erhöht wird.

## Claims

1. Device for controlling automatic coupling (3) between a motor (2), particularly an internal combustion engine, and a drive line of a vehicle with randomly changeable gearing (4), whereby the coupling is controlled, during driving, on the basis of the engine torque, such that the moment that can be transmitted by the coupling only lies slightly above the torque produced at the given time by the engine,
characterized in that
the coupling (3), immediately after a gearchange, is adjusted, for a slowing down time-period, to the maximum transmissible torque, if the engine torque or a similar measured quantity exceeds a low threshold or rapidly increases.

2. Controlling device in accordance with claim 1,
characterized in that
the coupling (3) is controlled according to the engine torque, immediately after a gearchange, if the engine torque after the gearchange remains low and/or only increases slowly in relation to a low value.

3. Controlling device in accordance with claim 1 or 2,
characterized in that
the coupling moment is increased at higher vehicle speeds.

## Revendications

1. Commande d'un embrayage automatique (3), entre le moteur (2), en particulier un moteur à combustion, et le tronçon d'entraînement d'un véhicule automobile, avec une boîte de vitesses (4) pouvant être manoeuvrée à volonté, l'embrayage étant commandé en fonctionnement en roulage, en fonction du couple moteur, de manière que le couple transmissible par l'embrayage ne soit que légèrement supérieur au couple chaque fois produit par le moteur,
caractérisée en ce que
l'embrayage (3) est réglé, directement après un changement de vitesse de la boîte de vitesses, pour un temps de décélération, à un couple transmissible maximal, lorsque le couple moteur, ou bien une grandeur lui étant analogue, dépasse une faible valeur de seuil ou augmente rapidement.

2. Commande selon la revendication 1, caractérisée en ce que l'embrayage (3) est commandé, directement après un changement de vitesse, en fonction du couple moteur, lorsque le couple moteur reste faible après le changement de vitesse et/ou n'est augmenté que lentement par rapport à une faible valeur.

3. Commande selon la revendication 1 ou 2, caractérisée en ce que le couple de l'embrayage est augmenté lorsque la vitesse de roulage augmente.
